# EUROPEAN PATENT APPLICATION

(11) **EP 4 567 973 A1**
(43) Date of publication of application: **11.06.2025**
(21) Application number: 23850127.4
(22) Date of filing: 02.08.2023
(51) Int. Cl.: H01M 10/658, H01M 10/613, H01M 10/625

(54) **HEAT TRANSFER SUPPRESSION SHEET AND BATTERY PACK**

(30) Priority: 03.08.2022 JP 2022124246
(71) Applicant: IBIDEN CO., LTD., Ogaki-shi, Gifu 503-8604 (JP)
(72) Inventor: KUMANO, Keiji, Ibi-gun, Gifu 501-0695 (JP); IDO, Takahiko, Ibi-gun, Gifu 501-0695 (JP)
(74) Representative: Hoffmann Eitle
(86) International application number: PCT/JP2023/028308
(87) International publication number: WO 2024/029573

(57) **Abstract**

There is provided a heat transfer suppression sheet which has excellent heat insulating properties and also makes it possible to suppress the contamination of the periphery due to powder falling. A heat transfer suppression sheet (10) has a heat insulating material (11) including inorganic particles and organic fibers, and a resin film (12) encompassing the heat insulating material (11). The resin film (12) has holes (13) and is composed of a first surface-side film (12a) and a second surface-side film (12b) that are respectively disposed on a first surface side and a second surface side which are orthogonal to a thickness direction of the heat insulating material (11), and an end surface-side film (12c) that is disposed on an end surface side parallel to the thickness direction of the heat insulating material. In addition, an area ratio of the holes (13) in the first surface-side film (12a) and the second surface-side film (12b) to the total area of the first surface-side film (12a) and the second surface-side film (12b) is larger than an area ratio of the holes (13) in the end surface-side film (12c) to the total area of the end surface-side film (12c).

## Description

### TECHNICAL FIELD

The present invention relates to a heat transfer suppression sheet and a battery pack including the heat transfer suppression sheet.

### BACKGROUND ART

In recent years, the development of electric vehicles or hybrid vehicles which are driven by an electric motor has been actively promoted from the viewpoint of environmental protection. A battery pack in which battery cells are connected in series or in parallel is mounted in the electric vehicle, the hybrid vehicle, or the like, where the battery pack is for serving as a power source for an electric motor for driving.

A lithium ion secondary battery that can have a high capacity and a high output as compared with a lead storage battery, a nickel hydrogen battery, or the like is mainly used for the battery cell. In addition, in a case where a certain battery cell causes such thermal runaway that the temperature of the battery cell rapidly rises and even thereafter, heat generation continues due to internal short-circuiting, overcharging, or the like of the battery, there is a concern that the heat from the battery cell that has caused thermal runaway propagates to adjacent other battery cells, which causes thermal runaway of the other battery cells.

As a method of suppressing the propagation of heat from the battery cell that has caused such thermal runaway as described above, a method of interposing a heat insulating sheet between battery cells is generally carried out.

By the way, examples of the binder in a case of manufacturing a heat insulating sheet include a hygrothermal adhesive binder fiber. However, in order to exhibit adhesiveness of the hygrothermal adhesive binder fiber, it is necessary to bring the hygrothermal adhesive binder fiber into a wet state during manufacturing. Therefore, in a case where the hygrothermal adhesive binder fiber is used, the heat insulating sheet needs to be manufactured according to a wet type sheet forming method.

However, in a case where a dry type silica or a silica aerogel, which has a low thermal conductivity, is used for the intended purpose of improving much further the heat insulating performance, there is a problem in that the heat insulating sheet cannot be manufactured according to the wet type sheet forming method. This is because, in a case where a material containing a dry type silica is molded into a sheet shape by the wet type sheet forming method, the dry type silica is aggregated by water, and the thermal conductivity is increased. In addition, in general, it is difficult to disperse a silica aerogel in water. Thuse, when a material containing a silica aerogel is molded according to the wet type sheet forming method, it is not possible to obtain a heat insulating sheet in which the material is uniformly dispersed, which causes a decrease in quality.

On the other hand, when a heat insulating sheet is manufactured according to a dry type molding method by using inorganic particles such as a dry type silica or a silica aerogel, the inorganic particles may fall off (hereinafter, also referred to as powder falling) due to pressure, impact, or the like.

For example, Patent Literature 1 discloses a thermal runaway barrier for a battery cell, which has a nonwoven fibrous heat insulating material including a fiber matrix of inorganic fibers, inorganic particles having heat insulating properties, and a binder, and an organic sealing layer that seals the heat insulating material.

Thermal runaway barrier for a battery cell described in Patent Literature 1 is configured such that at the time when a gas confined in the organic sealing layer is heated to a high temperature, the gas is discharged to the outside, for example, from an opening portion formed at a peripheral edge portion of the heat insulating material.

### CITATION LIST

### PATENT LITERATURE

PATENT LITERATURE 1: International Publication No. WO2022/024076

### SUMMARY OF INVENTION

### TECHNICAL PROBLEM

However, the heat insulating material that prevents the thermal runaway of a battery cell is generally disposed in a battery case in a state where the heat insulating material is disposed between battery cells. Thus, when a gas is discharged from the peripheral edge portion of the heat insulating material as in the case of the above-described thermal runaway barrier, inorganic particles and the like are jetted out together with the gas, and the inside of the battery case is contaminated.

The present invention has been made in consideration of the above-described problems, and an object of the present invention is to provide a heat transfer suppression sheet which has excellent heat insulating properties and also makes it possible to suppress the contamination of the periphery due to powder falling, and a battery pack having the heat transfer suppression sheet.

### SOLUTION TO PROBLEM

The above-described object of the present invention is achieved by the following configuration of [1] pertaining to a heat transfer suppression sheet.
[1] A heat transfer suppression sheet containing:
   a heat insulating material that includes inorganic particles and an organic fiber; and
   a resin film that encompasses the heat insulating material,
   in which the resin film has holes,
   the resin film is composed of a first surface-side film and a second surface-side film that are respectively disposed on a first surface side and a second surface side which are orthogonal to a thickness direction of the heat insulating material, and an end surface-side film that is disposed on an end surface side parallel to the thickness direction of the heat insulating material, and
   an area ratio of the holes in the first surface-side film and the second surface-side film to a total area of the first surface-side film and the second surface-side film is larger than an area ratio of the holes in the end surface-side film to a total area of the end surface-side film.

In addition, the preferred embodiments pertaining to the heat transfer suppression sheet according to the present invention relate to the following [2] to [10].
[2] The heat transfer suppression sheet according to [1], in which the end surface-side film does not have the hole.
[3] The heat transfer suppression sheet according to [1], in which an average area per one hole of the holes in the first surface-side film and the second surface-side film is larger than an average area per one hole of the holes in the end surface-side film.
[4] The heat transfer suppression sheet according to any one of [1] to [3], in which the end surface-side film has a fused portion in which the resin films are fused to each other.
[5] The heat transfer suppression sheet according to any one of [1] to [4], in which the holes in the first surface-side film and the second surface-side film have an elliptical shape.
[6] The heat transfer suppression sheet according to [5], in which a first surface and a second surface of the heat insulating material have a rectangular shape, and the holes in the first surface-side film and the second surface-side film have an elliptical shape having a major axis in substantially the same direction as a longitudinal direction of the first surface and the second surface of the heat insulating material.
[7] The heat transfer suppression sheet according to [6], in which the holes in the first surface-side film and the second surface-side film are disposed at substantially equal intervals in a direction orthogonal to the first surface and the second surface of the heat insulating material.
[8] The heat transfer suppression sheet according to [7], in which the holes are arranged along a longitudinal direction and a direction orthogonal to the longitudinal direction on the first surface and the second surface of the heat insulating material.
[9] The heat transfer suppression sheet according to any one of [1] to [8], in which the heat insulating material has void portions, and the void portions and the holes of the resin film communicate with each other.
[10] The heat transfer suppression sheet according to any one of [1] to [9], in which the heat transfer suppression sheet has an elastic sheet at at least one of a space between the first surface of the heat insulating material and the first surface-side film or a space between the second surface of the heat insulating material and the second surface-side film.
   In addition, the above-described object of the present invention is achieved by the following configuration of [11] pertaining to a battery pack.
[11] A battery pack including:
   battery cells; and
   the heat transfer suppression sheet according to any one of [1] to [10],
   in which the battery cells are connected in series or in parallel.

### ADVANTAGEOUS EFFECTS OF INVENTION

Since the heat transfer suppression sheet according to the present invention contains a heat insulating material including a predetermined material and a resin film encompassing the heat insulating material, it is possible to obtain an excellent heat insulating effect, and it is also possible to suppress powder falling. In addition, since the area ratio of the holes in the first surface-side film and the second surface-side film which are orthogonal to the thickness direction is larger than the area ratio of the holes in the end surface-side film parallel to the thickness direction, it is possible to suppress the contamination of the periphery due to the jetting out of the internal air from the end surface side since the internal air is jetted out from the holes of the first surface-side film and the second surface-side film at the time when the heat transfer suppression sheet is heated.

According to the battery pack according to the present invention, since the heat transfer suppression sheet having excellent heat insulating properties and an effect of suppressing powder falling as described above is provided, it is possible to suppress the thermal runaway of the battery cell in the battery pack or the expansion of flame to the outside of the battery case.

### BRIEF DESCRIPTION OF DRAWINGS

Fig. 1 is a perspective view showing a structure of a heat transfer suppression sheet according to a first embodiment of the present invention.
Fig. 2 is a cross-sectional view schematically showing a battery pack having a heat transfer suppression sheet according to the first embodiment of the present invention.
Fig. 3 is a cross-sectional view showing a structure of a heat transfer suppression sheet according to a second embodiment of the present invention.

### DESCRIPTION OF EMBODIMENTS

The inventors of the present invention carried out intensive studies on a heat transfer suppression sheet that can solve the above-described problems.

As a result, it was found that it is effective that the heat transfer suppression sheet has a heat insulating material and a resin film which encompasses the heat insulating material and includes holes, and the area ratio of the holes on the main surface side orthogonal to the thickness direction of the heat insulating material is set to be larger than the area ratio of the holes on the end surface side parallel to the thickness direction of the heat insulating material.

Hereinafter, a heat transfer suppression sheet (heat insulating sheet) according to an embodiment of the present invention and a battery pack will be described in detail. It is noted that the present invention is not limited to the embodiments described below, and the present invention can be implemented with any modifications without departing from the scope of the present invention.

### [Heat transfer suppression sheet]

### <First embodiment>

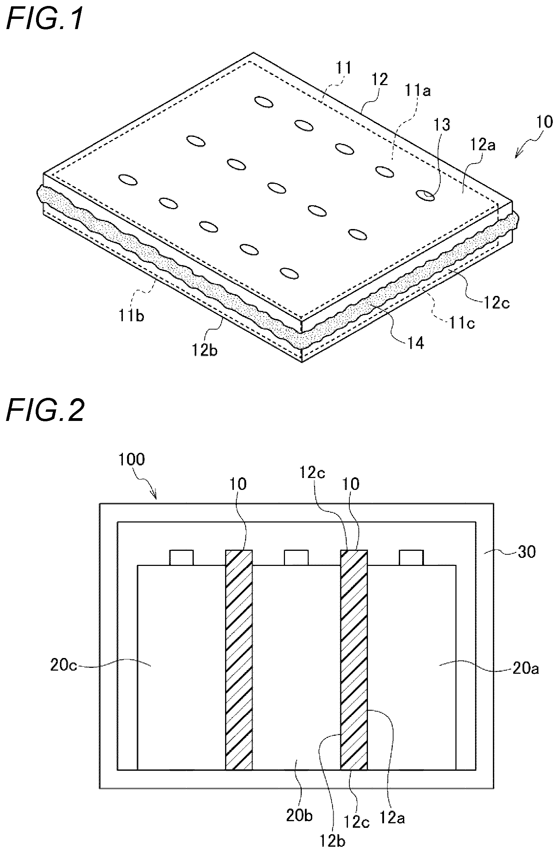

Fig. 1 is a perspective view showing a structure of a heat transfer suppression sheet according to a first embodiment of the present invention. As shown in Fig. 1, a heat transfer suppression sheet 10 according to the present embodiment has a heat insulating material 11 including inorganic particles and organic fibers, and a resin film 12 encompassing the heat insulating material 11. Holes 13 having an elliptical shape are formed in the resin film 12. In addition, the resin film 12 is composed of a first surface-side film 12a and a second surface-side film 12b, which respectively cover two main surfaces orthogonal to the thickness direction of the heat insulating material 11, that is, a first surface 11a and a second surface 11b, and an end surface-side film 12c which covers four end surfaces 11c parallel to the thickness direction of the heat insulating material 11. In addition, the area ratio of the holes 13 in the first surface-side film 12a and the second surface-side film 12b is designed to be larger than the area ratio of the holes 13 in the end surface-side film 12c.

Here, the area ratio of the holes 13 in the first surface-side film 12a and the second surface-side film 12b refers to a ratio of the area of the holes 13 formed in the first surface-side film 12a and the second surface-side film 12b to the total area of the first surface-side film 12a and the second surface-side film 12b. In addition, the area ratio of the holes 13 in the end surface-side film 12c refers to a ratio of the area of the holes 13 formed in the end surface-side film 12c to the total area of the end surface-side film 12c.

It is noted that in the present embodiment, the heat insulating material 11 is covered with a planar resin film, and the resin films 12 are fused to each other in the vicinity of the end surface 11c of the heat insulating material 11 to form the fused portion 14. In addition, the resin film 12 is heated and contracted, whereby the first surface 11a, the second surface 11b, and the end surface 11c of the heat insulating material 11 are covered with the resin film 12 to have a form in which they are in closely attached to the surface of the heat insulating material 11. Therefore, the thickness of the region in which the fused portion 14 is formed is increased since the fused portion 14 is mainly formed in the end surface-side film 12c. As a result, the end surface-side film 12c has a strength higher than those of the first surface-side film 12a and the second surface-side film 12b. In addition, even in a case where the hole 13 is present in the end surface 11c of the heat insulating material 11 in a state in which the heat insulating material 11 is covered with a planar resin film, the area ratio of the hole 13 in the end surface-side film 12c is smaller than the area ratio of the hole 13 in the first surface-side film 12a and the second surface-side film 12b since the fused portion 14 is formed.

A configuration in a case where the heat transfer suppression sheet 10 configured as described above is applied to a battery pack will be specifically described below. Fig. 2 is a cross-sectional view schematically showing a battery pack having a heat transfer suppression sheet according to the embodiment of the present invention. It is noted that the detailed structure of the heat transfer suppression sheet 10 shown in Fig. 1 is simplified in Fig. 2.

A battery pack 100 has a battery case 30, battery cells 20a, 20b, and 20c which are housed in the battery case 30, and a heat transfer suppression sheet 10 interposed between the battery cell 20a and the battery cell 20b and between the battery cell 20b and the battery cell 20c. The battery cells 20a, 20b, and 20c are connected in series or in parallel by a bus bar or the like, which is not shown in the drawing. It is noted that although, for example, a lithium ion secondary battery is suitably used for the battery cells 20a, 20b, and 20c, the present invention is not particularly limited thereto, and other secondary batteries can also be applied.

In the first embodiment applied to the battery pack 100 configured as described above, since the heat insulating material 11 is encompassed in the resin film, it is possible to prevent the particles and the like from falling off at the time when the heat transfer suppression sheet 10 is incorporated into the battery pack 100. In addition, since the heat insulating material 11 includes inorganic particles and organic fibers and has high heat insulating properties, it is possible to suppress the propagation of heat from the battery cell that has caused thermal runaway to the adjacent battery cell.

Further, for example, in a case where the temperature of the battery cell 20a has risen, the air contained in the inside of the heat insulating material 11 disposed between the battery cell 20a and the battery cell 20b, and the air contained in the space or the like between the heat insulating material 11 and the inside of the resin film 12 expand, and the air is discharged from the holes 13 of the resin film 12. At this moment, in the present embodiment, the area ratio of the holes 13 in the first surface-side film 12a in contact with the battery cell 20a and the second surface-side film 12b in contact with the battery cell 20b is larger than the area ratio of the holes 13 in the end surface-side film 12c. Therefore, air is likely to be discharged from the first surface-side film 12a and the second surface-side film 12b, and air is gently discharged from the gap between the battery cell 20a and the battery cell 20b through the holes 13 of the first surface-side film 12a and the second surface-side film 12b. Thus, it is possible to suppress the spread of the contamination of the particles in the battery case 30.

In order to discharge more air from the holes 13 of the first surface-side film 12a and the second surface-side film 12b, it is preferable that the area ratio of the holes 13 of the end surface-side film 12c is as small as possible, and it is more preferable that the end surface-side film 12c does not have holes (that is, the area ratio is 0%). In addition, even in a case where the end surface-side film 12c has the holes 13, it is preferable that the average area per one hole of the holes 13 in the first surface-side film 12a and the second surface-side film 12b is larger than the average area per one hole of the holes 13 in the end surface-side film 12c.

Examples of the method of making the area ratio of the holes 13 of the end surface-side film 12c smaller than the area ratios of the holes 13 of the first surface-side film 12a and the second surface-side film 12b include a method of forming holes only in regions corresponding to the first surface-side film 12a and the second surface-side film 12b during the manufacturing of the heat transfer suppression sheet. In addition, examples thereof include a method of forming holes in regions corresponding to the first surface-side film 12a and the second surface-side film 12b to be larger than holes in regions corresponding to the end surface-side film 12c, and a method of forming the fused portion 14 in which the resin films are fused to each other in the end surface-side film 12c. By forming the fused portion 14 in the end surface-side film 12c, the smoothness of the first surface-side film 12a and the second surface-side film 12b can also be ensured. In this regard, a part of the fused portion 14 may be formed in the first surface-side film 12a and the second surface-side film 12b depending on the conditions and the like at the time of manufacturing. However, when most of the fused portion 14 is formed in the end surface-side film 12c, it is possible to obtain an effect of controlling the area ratio of the holes or an effect of ensuring the smoothness of the first surface-side film 12a and the second surface-side film 12b.

It is noted that, for example, the battery cell 20a and the heat transfer suppression sheet 10, and the battery cell 20b and the heat transfer suppression sheet 10 are not completely closely attached to each other, and regions that are closely attached to each other and regions that are slightly spaced from each other are present. If the hole 13 is hypothetically blocked completely by the closely attached region, air becomes hard to be discharged from the hole 13, and the actual area ratio of the holes 13 of the first surface-side film 12a and the second surface-side film 12b is decreased. Therefore, in order to prevent the holes 13 from being completely blocked by adjacent battery cells, it is preferable that the shape of the hole 13 is an elliptical shape that extends long on one side.

Further, in a case where the first surface 11a and the second surface 11b of the heat insulating material 11 have a rectangular shape, and when the holes 13 have an elliptical shape having a major axis in substantially the same direction as the longitudinal direction on the first surface 11a and the second surface 11b of the heat insulating material 11,the adjacent holes 13 are too close to each other, and the strength is reduced, which makes it possible to suppress the occurrence of cracking in the resin film 12.

Similarly, when the holes 13 in the first surface-side film 12a and the second surface-side film 12b are disposed at substantially equal intervals on the first surface 11a and the second surface 11b of the heat insulating material 11, the adjacent holes 13 are too close to each other, which makes it possible to suppress the occurrence of cracking in the resin film 12. Further, when the holes 13 are arranged along the longitudinal direction and a direction orthogonal to the longitudinal direction on the first surface 11a and the second surface 11b of the heat insulating material 11, it is possible to suppress the occurrence of cracking much further.

It is noted that the phrase that the longitudinal direction on the first surface 11a and the second surface 11b of the heat insulating material 11 and the major axis of the hole 13 are "substantially the same direction" is not limited to a case where the longitudinal direction on the first surface 11a and the second surface 11b of the heat insulating material 11 and the major axis of the hole 13 are strictly directed in the same direction, and it is also meant to include a case where the major axis of the hole 13 is aligned along the longitudinal direction on the first surface 11a and the second surface 11b of the heat insulating material 11.

In addition, the phrase that the holes 13 are at "substantially equal intervals" on the first surface 11a and the second surface 11b of the heat insulating material 11 is not limited to a case where the holes 13 are strictly disposed at equal intervals, it is also meant to include a case where the holes 13 are disposed in a pattern shape on the first surface 11a and the second surface 11b of the heat insulating material 11.

Although the preferred constitutional component, structure, and the like of the heat insulating material 11 will be described later, when the heat insulating material 11 has void portions, it is preferable that the void portions and the holes 13 of the resin film 12 communicate with each other, since the air in the heat insulating material 11 is easily discharged through the holes 13. Further, when the inorganic hydrate particles are included as the inorganic particles in the heat insulating material 11, the water of crystallization is easily discharged from the holes 13 of the resin film 12 through the void portion at the time when the inorganic hydrate particles are thermally decomposed by heating to release the water of crystallization.

### <Second embodiment>

The heat transfer suppression sheet 10 according to the first embodiment has the heat insulating material 11 and the resin film 12 that is closely attached to the surface of the heat insulating material 11. However, in the present invention, the heat transfer suppression sheet 10 according to the first embodiment may have a material other than the heat insulating material 11, as necessary.

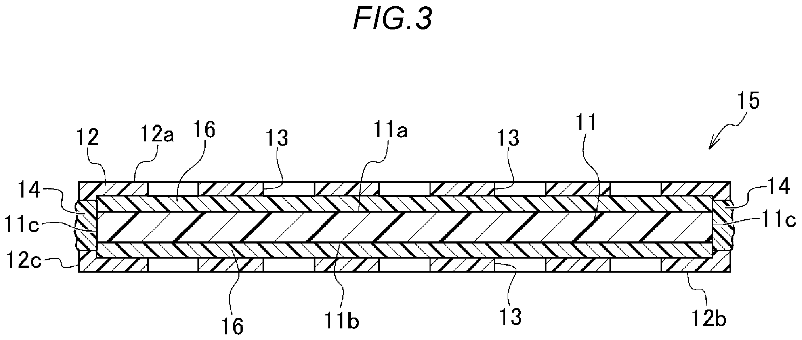

Fig. 3 is a cross-sectional view showing a structure of a heat transfer suppression sheet according to a second embodiment of the present invention. In the second embodiment shown in Fig. 3, the same elements as those in the first embodiment shown in Fig. 1 are denoted by the same reference numerals, and the detailed description thereof will be omitted or simplified. In addition, since the second embodiment can be used instead of the heat transfer suppression sheet 10 described in the battery pack 100 shown in Fig. 2, the effect and the like of the second embodiment will be described assuming that the heat transfer suppression sheet according to the second embodiment is applied to the battery pack 100.

A heat transfer suppression sheet 15 according to the second embodiment has the heat insulating material 11, an elastic sheet 16 that is laminated on the first surface 11a side and the second surface 11b side of the heat insulating material 11, and the resin film 12 that encompasses the heat insulating material 11 and the elastic sheet 16. That is, the elastic sheet 16 is disposed between the first surface 11a of the heat insulating material 11 and the first surface-side film 12a, and the elastic sheet 16 is also disposed between the second surface 11b of the heat insulating material 11 and the second surface-side film 12b. It is noted that the area ratio, shape, and the like of the holes 13 are the same as those in the first embodiment.

Even in the heat transfer suppression sheet 15 according to the second embodiment, which is configured in this way, the outer surface of the heat insulating material 11 or the like is covered with the resin film 12 as in the first embodiment, and thus it is possible to prevent the falling off of the particles or the like. In addition, at the time when the heat transfer suppression sheet 15 is incorporated into the battery pack 100, it is possible to prevent the positional displacement between the heat insulating material 11 and the elastic sheet 16. Further, since the heat insulating material 11 has high heat insulating properties, it is possible to suppress the propagation of heat from the battery cell that has caused thermal runaway to the adjacent battery cell.

It is noted that, in particular, in a case of a battery pack in recent years, the capacity of the battery cell has been improved much further, and thus the expansion rate during charging and discharging has increased. Therefore, in a case where the internal pressure of the battery cells 20a, 20b, and 20c is repeatedly increased and decreased during charging and discharging, the battery cells 20a, 20b, and 20c are repeatedly subjected to pressing and relaxing by the case, which causes a decrease in battery performance.

On the other hand, in the present embodiment, a stress can be generated in a case where the battery cell expands, and since the elastic sheet 16 is disposed on the main surface (the first surface 11a and the second surface 11b) side of the heat insulating material 11, and the performance of the battery can be maintained since the pressing force on the battery cells 20a, 20b, and 20c can be relaxed.

Further, in the present embodiment, since the elastic sheet 16 is disposed on the main surface side of the heat insulating material 11, it is possible to significantly reduce powder falling from the main surface side of the heat insulating material 11 and it is also possible to prevent a decrease in the heat insulating effect due to the compressive deformation of the heat insulating material 11. It is noted that in a case where such a structure is adopted, although the falling off of the particles occurs most frequently in the region on the end surface 11c side of the heat insulating material 11, it is possible to much further suppress the spread of contamination due to the jetting out of particles in inside the battery case 30 since, in the present embodiment, air is likely to be discharged from the first surface-side film 12a and the second surface-side film 12b.

It is noted that in the second embodiment shown in Fig. 3, although the elastic sheet 16 is disposed on both the first surface 11a side and the second surface 11b side of the heat insulating material 11, the elastic sheet 16 does not necessarily need to be disposed on both sides of the heat insulating material 11. That is, even in a case where the elastic sheet 16 is disposed at least one of a space between the first surface 11a of the heat insulating material 11 and the first surface-side film 12a or a space between the second surface 11b of the heat insulating material 11 and the second surface-side film 12b, the pressing force on the battery cells 20a, 20b, and 20c can be relaxed, which makes it possible to obtain the effect of maintaining the performance of the battery.

Hereinafter, materials constituting the heat transfer suppression sheets 10 and 15 according to the present embodiment will be described in detail.

### [Heat insulating material]

### <Organic fiber>

The organic fiber has an effect of imparting flexibility to the heat insulating material 11 and also has an effect of increasing the strength of the heat insulating material 11 by forming a skeleton with the organic fiber. In addition, when the inorganic particles and the other organic fibers are fused to the surface of the organic fiber, the effect of improving the strength of the sheet and the effect of maintaining the shape can be improved much further. In addition, when the heat insulating material 11 contains an appropriate content of organic fibers, void portions are formed inside the heat insulating material 11, and air or water can be released to the outside through the void portions at the time when the heat insulating material 11 is heated.

As a material of the organic fiber in the heat insulating material 11, a single-component organic fiber can also be used. However, a binder fiber having a core-sheath structure is preferably used. The binder fiber having a core-sheath structure has a core portion extending in the longitudinal direction of the fiber and a sheath portion formed to cover the outer peripheral surface of the core portion. In this case, the core portion is composed of a first organic material, the sheath portion is composed of a second organic material, and a melting point of the first organic material is higher than a melting point of the second organic material.

### (First organic material)

In the present embodiment, in a case where a binder fiber having a core-sheath structure is used, the first organic material constituting the core portion is not particularly limited as long as it has a melting point higher than a melting point of a sheath portion present on the outer peripheral surface of the core portion, that is, the melting point of the second organic material. Examples of the first organic material include at least one selected from polyethylene terephthalate, polypropylene, and nylon.

### (Second organic material)

The second organic material is not particularly limited as long as it has a melting point lower than a melting point of the first organic material constituting the organic fiber. Examples of the second organic material include at least one selected from polyethylene terephthalate, polyethylene, polypropylene, or nylon.

It is noted that the melting point of the second organic material is preferably 90°C or higher and more preferably 100°C or higher. In addition, the melting point of the second organic material is preferably 150°C or lower and more preferably 130°C or lower.

### (Content of organic fiber)

In the present embodiment, when the content of the organic fiber in the heat insulating material 11 is appropriately controlled, the effect of reinforcing the skeleton can be sufficiently obtained.

The content of the organic fiber is preferably 5% by mass or more, and more preferably 10% by mass or more with respect to the total mass of the heat insulating material 11. In addition, when the content of the organic fiber is too large, the content of the inorganic particles is relatively reduced. Thus, in order to obtain the desired heat insulating performance, the content of the organic fiber is preferably 25% by mass or less and more preferably 20% by mass or less with respect to the total mass of the heat insulating material 11.

### (Fiber length of organic fiber)

The fiber length of the organic fiber is not particularly limited; however, from the viewpoint of ensuring moldability and processability, the average fiber length of the organic fiber is preferably 10 mm or less.

On the other hand, from the viewpoint of causing the organic fiber to function as a skeleton and ensuring the compressive strength of the heat transfer suppression sheet, the average fiber length of the organic fiber is preferably 0.5 mm or more.

### <Inorganic particle>

As the inorganic particles, a single kind of inorganic particles may be used, or two or more kinds of inorganic particles may be used in combination. Regarding the kind of the inorganic particles, from the viewpoint of the effect of suppressing heat transfer, it is preferable to use a particle composed of at least one inorganic material, which is selected from an oxide particle, a carbide particle, a nitride particle, or an inorganic hydrate particle, and it is more preferable to use an oxide particle. In addition, the shape thereof is not particularly limited; however, it is preferable to include at least one selected from a nanoparticle, a hollow particle, or a porous particle, and specifically, it is also possible to use an inorganic balloon such as a silica nanoparticle, a metal oxide particle, a microporous particle, or a hollow silica particle, a particle composed of a thermally expandable inorganic material, a particle composed of a water-containing porous body, or the like.

When the average secondary particle diameter of the inorganic particles is 0.01 µm or more, the inorganic particles are easily available, and an increase in manufacturing cost can be suppressed. In addition, when the thickness thereof is 200 µm or less, a desired heat insulating effect can be obtained. Therefore, the average secondary particle diameter of the inorganic particles is preferably 0.01 µm or more and 200 µm or less, and more preferably 0.05 µm or more and 100 µm or less.

It is noted that when two or more kinds of inorganic particles having an effect of suppressing heat transfers different from each other are used in combination, the heat generating body can be cooled in multiple stages, and the endothermic action can be exhibited in a wider temperature range. Specifically, it is preferable to use a particle having a large diameter and a particle having a small diameter in combination. For example, in a case where a nanoparticle is used as one kind of inorganic particle, it is preferable that the other kind of inorganic particle includes an inorganic particle composed of a metal oxide. Hereinafter, the inorganic particles will be described in more detail by defining an inorganic particle having a small diameter as the first inorganic particle and an inorganic particle having a large diameter as the second inorganic particle.

### <First inorganic particle>

### (Oxide particle)

The oxide particle has a high refractive index and has a strong effect of subjecting light to irregular reflection. Therefore, when the oxide particle is used as the first inorganic particle, it is possible to suppress radiative heat transfer, particularly in a high temperature range in abnormal heat generation or the like. As the oxide particle, at least one kind of particle selected from silica, titania, zirconia, zircon, barium titanate, zinc oxide, or alumina can be used. That is, among the above-described oxide particles that can be used as the inorganic particles, one kind of oxide particle may be used, or two or more kinds of oxide particles may be used. In particular, silica is a component having high heat insulating properties, and titania is a component having a high refractive index as compared with other metal oxides, whereby the effect of subjecting light to irregular reflection and blocking radiant heat is high in a high temperature range of 500°C or higher. Therefore, it is most preferable to use silica and titania as the oxide particle.

### (Average primary particle diameter of oxide particles: 0.001 µm or more and 50 µm or less)

Since the particle diameter of the oxide particles may affect the effect of reflecting the radiant heat, it is possible to obtain much higher heat insulating properties when the average primary particle diameter is limited to a predetermined range.

That is, when the average primary particle diameter of the oxide particles is 0.001 µm or more, the average primary particle diameter is sufficiently larger than the wavelength of light contributing to heating, and thus the light is efficiently subjected to irregular reflection. Thus, the radiative heat transfer of heat in the heat transfer suppression sheet is suppressed in a high temperature range of 500°C or higher, and the heat insulating properties can be improved much further.

On the other hand, when the average primary particle diameter of the oxide particles is 50 µm or less, the number of contact points between particles does not increase even if the particles are compressed, and it is difficult to form a path for conductive heat transfer. Thus, it is possible to reduce the influence on the heat insulating properties in a normal temperature range in which conductive heat transfer is dominant.

It is noted that in the present invention, the average primary particle diameter can be determined by observing particles with a microscope, comparing the particles with a standard scale, and averaging any 10 particles.

### (Nanoparticle)

In the present invention, the nanoparticle indicates a particle of a nanometer order having an average primary particle diameter of less than 1 µm, which is spherical or close to spherical. The nanoparticle suppresses conductive heat transfer due to having a low density, and the small void portions are further dispersed when the nanoparticle is used as the first inorganic particle. Thus, it is possible to obtain excellent heat insulating properties that suppress convective heat transfer. For this reason, it is preferable to use the nanoparticles from the viewpoint that the transfer of heat between the adjacent nanoparticles can be suppressed at the time when the battery is used in a normal temperature range.

Further, when nanoparticles having a small average primary particle diameter are used as the oxide particles, it is possible to suppress the rise of the conductive heat transfer of the heat transfer suppression sheet even in a case where the heat transfer suppression sheet is compressed due to expansion associated with thermal runaway of the battery cell and the density inside the heat transfer suppression sheet is increased. It is considered that this is because the nanoparticles make it easy to form small void portions between particles by electrostatic repulsion, and the bulk density is low, whereby the particles are filled to have cushioning properties.

It is noted that in the present invention, in a case where nanoparticles are used as the first inorganic particles, the material thereof is not particularly limited as long as it is in accordance with the definition of the nanoparticles. For example, since the silica nanoparticles have a small contact point between particles in addition to being a material having high heat insulating properties, the amount of heat transferred by the silica nanoparticles is small as compared with a case where silica particles having a large particle diameter are used. In addition, since the silica nanoparticles generally available have a bulk density of about 0.1 (g/cm³), the size (area) or the number of the contact points between the silica nanoparticles does not significantly increase, and thus the heat insulating properties can be maintained, for example, even in a case where the battery cells disposed on both sides of the heat transfer suppression sheet are thermally expanded and a large compressive stress is applied to the heat transfer suppression sheet. Therefore, it is preferable to use silica nanoparticles as the nanoparticles. Examples of the silica nanoparticles a wet type silica, a dry type silica, and an aerogel. However, the silica nanoparticles particularly suitable for the present embodiment will be described below.

In general, in the case of the wet type silica, particles are aggregated, whereas in the case of the dry type silica, particles can be dispersed. In a temperature range of 300°C or lower, conductive heat transfer is dominant in the transfer of heat. Thus, the dry type silica in which particles can be dispersed makes it possible to obtain excellent heat insulating performance as compared with the wet type silica.

It is noted that it is preferable that the heat transfer suppression sheet according to the present embodiment is manufactured by a manufacturing method in which a mixture including a material is processed into a sheet shape by a dry type method. Therefore, it is preferable to use, as the inorganic particles, a dry type silica having low thermal conductivity, a silica aerogel, or the like.

### (Average primary particle diameter of nanoparticles: 1 nm or more and 100 nm or less)

It is possible to obtain much higher heat insulating properties when the average primary particle diameter of the nanoparticles is limited to a predetermined range.

That is, when the average primary particle diameter of the nanoparticles is 1 nm or more and 100 nm or less, it is possible to suppress the convective heat transfer and the conductive heat transfer of heat in the heat transfer suppression sheet, particularly in a temperature range lower than 500°C, and thus it is possible to improve much further the heat insulating properties. In addition, even in a case where the compressive stress is applied, the void portions remaining between the nanoparticles and the contact points between the particles suppress the conductive heat transfer, and thus the heat transfer suppression sheet can maintain heat insulating properties.

It is noted that the average primary particle diameter of the nanoparticles is more preferably 2 nm or more and still more preferably 3 nm or more. On the other hand, the average primary particle diameter of the nanoparticles is more preferably 50 nm or less and still more preferably 10 nm or less.

### (Inorganic hydrated particle)

When inorganic hydrate particles receive heat from a heat generating body and the temperature reaches or exceeds the thermal decomposition initiation temperature, the inorganic hydrate particles are thermally decomposed to release the water of crystallization contained in the inorganic hydrate particles themselves, thereby exhibiting a so-called "endothermic action" of lowering the temperature of the heat generating body and the periphery thereof. In addition, after the release of the water of crystallization, the porous body is formed, and the heat insulating action is exhibited by innumerable air holes.

Specific examples of the inorganic hydrate include aluminum hydroxide (Al(OH)₃), magnesium hydroxide (Mg(OH)₂), calcium hydroxide (Ca(OH)₂), zinc hydroxide (Zn(OH)₂), iron hydroxide (Fe(OH)₂), manganese hydroxide (Mn(OH)₂), zirconium hydroxide (Zr(OH)₂), and gallium hydroxide (Ga(OH)₃).

For example, aluminum hydroxide has about 35% of water of crystallization, and it thermally decomposes to release the water of crystallization, thereby exhibiting an endothermic action, as shown in the following formula. Then, after the release of the water of crystallization, alumina (Al₂O₃), which is a porous body, is formed and functions as a heat insulating material.

2Al(OH)₃ → Al₂O₃ + 3H₂O

It is noted that, as described above, although the heat transfer suppression sheets 10 and 15 according to the present embodiment are suitable for being interposed, for example, between battery cells, the temperature rapidly rises to a temperature higher than 200°C, and the temperature continues to rise to around 700°C in a battery cell that has undergone thermal runaway. Therefore, the inorganic particles included in the heat insulating material 11 are preferably composed of an inorganic hydrate having a thermal decomposition initiation temperature of 200°C or higher.

Regarding thermal decomposition initiation temperature of each of the inorganic hydrates described above, it is about 200°C for aluminum hydroxide, about 330°C for magnesium hydroxide, about 580°C for calcium hydroxide, about 200°C for zinc hydroxide, about 350°C for iron hydroxide, about 300°C for manganese hydroxide, about 300°C for zirconium hydroxide, and about 300°C for gallium hydroxide, and all of the thermal decomposition initiation temperatures are almost overlapped with the temperature range of the rapid temperature rise of the battery cell that has undergone thermal runaway, which makes it possible to effectively suppress the temperature rise. Therefore, it can be said that the inorganic hydrates are preferable.

### (Average secondary particle diameter of inorganic hydrate particles: 0.01 µm or more and 200 µm or less)

In addition, in a case where inorganic hydrate particles are used as the first inorganic particles, the first inorganic particles (inorganic hydrate) adjacent to the center of the heat insulating material 11 require a certain amount of time to reach the thermal decomposition temperature thereof when the average particle diameter thereof is too large. Thus, the first inorganic particles adjacent to the center of the heat insulating material 11 may not be thermally decomposed completely. For this reason, the average secondary particle diameter of the inorganic hydrate particles is preferably 0.01 µm to 200 µm and more preferably 0.05 µm to 100 µm.

### (Particles composed of thermally expandable inorganic material)

Examples of the thermally expandable inorganic material include vermiculite, bentonite, mica, and perlite.

### (Particles composed of water-containing porous body)

Specific examples of the water-containing porous body include zeolite, kaolinite, montmorillonite, acidic clay, diatomaceous earth, a wet type silica, a dry type silica, an aerogel, mica, and vermiculite.

### (Inorganic balloon)

The heat insulating material that is used in the present invention may include an inorganic balloon as the first inorganic particle.

When the inorganic balloon is included, it is possible to suppress the convective heat transfer or the conductive heat transfer of heat in the heat insulating material in a temperature range of lower than 500°C, and it is possible to improve much further the heat insulating properties of the heat insulating material.

As the inorganic balloon, at least one selected from a shirasu balloon, a silica balloon, a fly ash balloon, a barite balloon, or a glass balloon can be used.

### (Content of inorganic balloon: 60% by mass or less with respect to total mass of heat insulating material)

The content of the inorganic balloon is preferably 60% by mass or less with respect to the total mass of the heat insulating material.

### (Average particle diameter of inorganic balloon: 1 µm or more and 100 µm or less)

The average particle diameter of the inorganic balloon is preferably 1 µm or more and 100 µm or less.

### <Second inorganic particle>

In a case where the heat transfer suppression sheet contains two kinds of inorganic particles, the second inorganic particles are not particularly limited as long as the material, particle diameter, and the like are different from those of the first inorganic particles. It is also possible to use, as the second inorganic particles, an inorganic balloon such as an oxide particle, a carbide particle, a nitride particle, an inorganic hydrate particle, a silica nanoparticle, a metal oxide particle, a microporous particle, or a hollow silica particle, a particle composed of a thermally expandable inorganic material, a particle composed of a water-containing porous body, or the like, and the details of these are as described above.

It is noted that the nanoparticles have extremely low conductive heat transfer and also make it possible to maintain excellent heat insulating properties even in a case where compressive stress is applied to the heat transfer suppression sheet. In addition, metal oxide particles such as titania have a high effect of blocking radiant heat. Further, when an inorganic particle having a large diameter and an inorganic particle having a small diameter are used, the inorganic particle having a small diameter enters the gaps between the inorganic particles having a large diameter, and thus a denser structure is formed, which makes it possible to improve the effect of suppressing heat transfer. Therefore, in a case where, for example, nanoparticles are used as the first inorganic particles, further, it is preferable that the heat transfer suppression sheet further contains, as the second inorganic particles, particles composed of a metal oxide having a diameter larger than the diameter of the first inorganic particles.

Examples of the metal oxide include silicon oxide, titanium oxide, aluminum oxide, barium titanate, zinc oxide, zircon, and zirconium oxide. In particular, titanium oxide (titania) is a component having a high refractive index as compared with other metal oxides, and the effect of subjecting light to irregular reflection and blocking radiant heat is high in a high temperature range of 500°C or higher. Thus, it is most preferable to use titania.

In a case where at least one kind of particle selected from a dry type silica particle or a silica aerogel is used as the first inorganic particle and at least one kind of particle selected from titania, zircon, zirconia, silicon carbide, zinc oxide, or alumina is used as the second inorganic particle, in order to obtain excellent heat insulating performance in a temperature range of 300°C or lower, the first inorganic particle is preferably 50% by mass or more, more preferably 60% by mass or more, and still more preferably 70% by mass or more with respect to the total mass of the inorganic particles. In addition, the content of the first inorganic particle is preferably 95% by mass or less, more preferably 90% by mass or less, and still more preferably 80% by mass or less with respect to the total mass of the inorganic particles.

On the other hand, in order to obtain excellent heat insulating performance in a temperature range exceeding 300°C, the content of the second inorganic particle is preferably 5% by mass or more, more preferably 10% by mass or more, and still more preferably 20% by mass or more with respect to the total mass of the inorganic particles. In addition, the content of the second inorganic particle is preferably 50% by mass or less, more preferably 40% by mass or less, and still more preferably 30% by mass or less with respect to the total mass of the inorganic particles.

### (Average primary particle diameter of second inorganic particles)

In a case where the heat transfer suppression sheet contains second inorganic particles composed of a metal oxide, it is possible to efficiently suppress radiative heat transfer in a high temperature range of 500°C or higher when the average primary particle diameter of the second inorganic particles is 1 µm or more and 50 µm or less. The average primary particle diameter of the second inorganic particles is still more preferably 5 µm or more and 30 µm or less, and most preferably 10 µm or less.

### (Content of inorganic particle)

In the present embodiment, when the total content of the inorganic particles in the heat insulating material 11 is appropriately controlled, the heat insulating properties of the heat insulating material 11 can be sufficiently ensured.

The total content of the inorganic particles is preferably 60% by mass or more, and more preferably 70% by mass or more with respect to the total mass of the heat insulating material 11. In addition, when the total content of the inorganic particles is excessively large, the content of the organic fiber is relatively reduced. Thus, in order to sufficiently obtain the effect of reinforcing the skeleton and the effect of holding the inorganic particles, the total content of the inorganic particles is preferably 95% by mass or less and more preferably 90% by mass or less with respect to the total mass of the heat insulating material 11.

It is noted that the content of the inorganic particles in the heat insulating material 11 can be calculated, for example, by heating the heat insulating material 11 at 800°C, decomposing the organic portion, and measuring the mass of the remaining portion.

The heat insulating material 11 according to the present embodiment may contain, in addition to the organic fiber and the inorganic particles, an organic fiber formed from an organic material different from the first organic material, an inorganic fiber, and the like. In a case where the heat insulating material 11 contains an inorganic fiber, the inorganic fiber that is preferably contained in the present embodiment will be described below.

### <Inorganic fiber>

As the inorganic fiber, a single kind of inorganic fiber may be used, or two or more kinds of inorganic fibers may be used in combination. Examples of the inorganic fiber include ceramic-based fibers such as a silica fiber, an alumina fiber, an aluminosilicate fiber, a zirconia fiber, a carbon fiber, a soluble fiber, a refractory ceramic fiber, an aerogel composite material, a magnesium silicate fiber, an alkaline earth silicate fiber, a potassium titanate fiber, a silicon carbide fiber, and a potassium titanate whisker fiber, glass-based fibers such as a glass fiber, glass wool, and slag wool, rock wool, a basalt fiber, a mullite fiber, and a fiber based on a natural mineral such as wollastonite, as a mineral-based fiber other than those described above.

These inorganic fibers are preferable in terms of heat resistance, strength, availability, and the like. Among the inorganic fibers, a silica-alumina fiber, an alumina fiber, a silica fiber, a rock wool, an alkaline earth silicate fiber, or a glass fiber is particularly preferable from the viewpoint of handleability.

The cross-sectional shape of the inorganic fiber is not particularly limited, and examples thereof include a circular cross section, a flat cross section, a hollow cross section, a polygonal cross section, and a core cross section. Among these, a modified cross-sectional fiber having a hollow cross section, a flat cross section, or a polygonal cross section can be suitably used since the heat insulating properties are slightly improved.

The preferred lower limit of the average fiber length of the inorganic fiber is 0.1 mm, and the more preferred lower limit thereof is 0.5 mm. On the other hand, the preferred upper limit of the average fiber length of the inorganic fiber is 50 mm, and the more preferred upper limit thereof is 10 mm. when the average fiber length of the inorganic fibers is less than 0.1 mm, the entanglement between the inorganic fibers is less likely to occur, and there is a concern that the mechanical strength of the heat insulating material 11 may be reduced. On the other hand, when the average fiber length thereof exceeds 50 mm, although a reinforcing effect can be obtained, the inorganic fibers may not be able to be closely entangled with each other, or a single inorganic fiber is individually curled. This may lead to a decrease in heat insulating properties may occur.

The preferred lower limit of the average fiber diameter of the inorganic fiber is 1 µm, the more preferred lower limit thereof is 2 µm, and the still more preferred lower limit thereof is 3 µm. On the other hand, the preferred upper limit of the average fiber diameter of the inorganic fiber is 15 µm, and the more preferred upper limit thereof is 10 µm. When the average fiber diameter of the inorganic fiber is less than 1 µm, there is a concern that the mechanical strength of the inorganic fiber itself may be reduced. In addition, from the viewpoint of the influence on the health of the human body, the average fiber diameter of the inorganic fiber is preferably 3 µm or more. On the other hand, when the average fiber diameter of the inorganic fiber is more than 15 µm, there is a concern that solid heat transfer using the inorganic fiber as a medium may increase, which may lead to a decrease in heat insulating properties, and in addition, there is a concern that the moldability and strength of the heat transfer suppression sheet may deteriorate.

### (Content of inorganic fiber)

In the present embodiment, in a case where the heat insulating material 11 contains inorganic fibers, the content of the inorganic fibers is preferably 3% by mass or more and 15% by mass or less with respect to the total mass of the heat insulating material 11.

In addition, the content of the inorganic fiber is more preferably 5% by mass or more and 10% by mass or less with respect to the total mass of the heat insulating material 11. Thanks to setting the content to be such a content, the shape holding property or the resistance to the pressing force due to the inorganic fiber, the wind resistance, and the holding capacity of the inorganic particles are exhibited in a well-balanced manner. In addition, by appropriately controlling of the content of the inorganic fiber, the organic fiber and the inorganic fiber are entangled with each other to form a three-dimensional network; and thus, the effect of holding the inorganic particles and other blending materials described later can be improved much further.

### <Other blending materials>

### (Hot melt powder)

In the present embodiment, the mixture may contain a hot melt powder in addition to the binder fiber and the inorganic particles. The hot melt powder is, for example, a powder that contains a third organic material different from the first organic material and the second organic material and has a property of being melted by heating. When the hot melt powder is contained in the mixture and heated, the hot melt powder is melted, and then when the mixture is cooled, the mixture is cured in a state of containing the inorganic particles in the periphery. Therefore, it is possible to suppress much further the falling off of the inorganic particles of the heat insulating material 11.

Examples of the hot melt powder include those having various melting points. However, a hot melt powder having an appropriate melting point may be selected in consideration of the melting points of the core portion and the sheath portion of the binder fiber to be used. Specifically, when the third organic material, which is a component constituting the hot melt powder, has a melting point lower than the melting point of the first organic material constituting the organic fiber, it is possible to set the heating temperature for melting the sheath portion and the hot melt powder while leaving the core portion unmelted. For example, when the melting point of the hot melt powder is equal to or lower than the melting point of the sheath portion, the heating temperature during manufacturing needs only to be set between the melting point of the core portion and the melting point of the sheath portion, and thus the heating temperature can be set much more easily.

On the other hand, the kind of hot melt powder to be used can also be selected so that the melting point of the hot melt powder is between the melting point of the core portion and the melting point of the sheath portion. At the time when a hot melt powder having such a melting point is used, the hot melt powder, which is present in the organic fiber (core portion) and the melted sheath portion in a periphery of the organic fiber (core portion), and the gap between the inorganic particles, is cured in advance after both the sheath portion and the hot melt powder are melted and then cooled to be cured. As a result, the positions of the organic fiber can be fixed, and then, the melted sheath portion is fused to the organic fiber, whereby a three-dimensional skeleton is easily formed. Therefore, the strength of the entire sheet can be improved much further.

When the melting point of the third organic material constituting the hot melt powder is sufficiently lower than the melting point of the first organic material constituting the core portion, it is possible to widen a setting margin of the heating temperature in a step of carrying out heating, and it is possible to easily set the temperature for obtaining a much more desired structure. For example, the melting point of the first organic material is preferably higher than the melting point of the third organic material by 60°C or more, more preferably higher than the melting point of the third organic material by 70°C or more, and still more preferably higher than the melting point of the third organic material by 80°C or more.

It is noted that the melting point of the hot melt powder (third organic material) is preferably 80°C or higher and more preferably 90°C or higher. In addition, the melting point of the hot melt powder (third organic material) is preferably 180°C or lower and more preferably 150°C or lower. Examples of the component constituting the hot melt powder include polyethylene, polyester, polyamide, and vinyl acetate.

### (Content of hot melt powder)

In a case where the material of the heat insulating material contains the hot melt powder in order to suppress the falling off of the inorganic particles, an effect of suppressing powder falling can be obtained even when the content of the hot melt powder is small. Therefore, the content of the hot melt powder is preferably 0.5% by mass or more, and more preferably 1% by mass or more with respect to the total mass of the materials of the heat insulating material.

On the other hand, when the content of the hot melt powder is increased, the content of the inorganic particles and the like is relatively decreased. Thus, in order to obtain the desired heat insulating performance, the content of the hot melt powder is preferably 5% by mass or less and more preferably 4% by mass or less with respect to the total mass of the materials of the heat insulating material.

In a case where the hot melt powder is contained as the material of the heat insulating material 11, the heating temperature in a step of carrying out heating is preferably set to be higher than any higher one of the melting point of the second organic material constituting the sheath portion or the melting point of the third organic material constituting the hot melt powder by 10°C or more, and more preferably set to be higher than any higher one of the melting point of the second organic material constituting the sheath portion or the melting point of the third organic material constituting the hot melt powder by 20°C or more. On the other hand, the heating temperature is preferably set to be lower than the melting point of the first organic material constituting the core portion by 10°C or more, and more preferably set to be lower than the melting point of the first organic material constituting the core portion by 20°C or more. When the heating temperature is set to such a heating temperature described above, a firm skeleton can be formed, and as a result, it is possible to improve the strength of the sheet much further, and it is also possible to prevent the inorganic particles from falling off.

It is noted that the heat insulating material 11 included in the heat transfer suppression sheet according to the present embodiment can further contain another bonding material, a coloring agent, and the like, as necessary. All of these are useful for the reinforcement of the heat insulating material 11, the improvement of moldability, and the like, and the total amount thereof with respect to the total mass of the heat insulating material 11 is preferably 10% by mass or less.

### [Elastic sheet]

In the present embodiment, as the elastic sheet 16, a sheet having elasticity, which flexibly undergoes deformation in response to the deformation of the battery cells 20a, 20b, and 20c, can be used. As such an elastic sheet 16, for example, rubber or an elastomer can be used. It is noted that specific examples of the rubber include foamed silicone.

### <Thickness of elastic sheet>

The thickness of the elastic sheet 16 is not particularly limited; however, it is preferably 1 mm or more and 10 mm or less in order to effectively obtain the above-described effect of the elastic sheet 16. In addition, it is preferable that the shape and size of the surface of the elastic sheet 16 in a direction orthogonal to the thickness direction are substantially the same as those of the first surface 11a and the second surface 11b of the heat insulating material 11.

It is noted that the term "substantially the same" means that a difference in size between the two shapes or between the two sizes is allowed to be ± 5%, preferably ± 3%, and more preferably ± 1% of the average value of the two shapes or the two sizes.

### [Resin film]

The resin film 12 encompasses at least the above-described heat insulating material 11, and it can prevent the particles and the like, which are the materials constituting the heat insulating material, from falling off.

As a material constituting the resin film, at least one resin selected from polyethylene, polypropylene, polystyrene, vinyl chloride, nylon, an acrylic resin, an epoxy resin, polyurethane, polyether ether ketone, polyetherimide, polyethylene terephthalate, polyphenyl sulfide, polycarbonate, or aramid can be selected.

It is noted that in the present embodiment, in a case where the heat insulating material 11, or the heat insulating material 11 and the elastic sheet 16 are covered with the resin film 12, it is preferable to use shrink packaging. As a result, it is more preferable to use the resin film 12 composed of a material suitable for shrink packaging. Examples of such a material include polyethylene, polypropylene, polystyrene, polyethylene terephthalate, and vinyl chloride.

### <Thickness of resin film>

In the present embodiment, the resin film 12 is closely attached to the outer surface of the heat insulating material or the like and has an effect of preventing the particles or the like from falling off, and thus it is preferable that the resin film 12 has an appropriate thickness. Further, in order for the resin film 12 to be in a configuration in which at least a part of the resin film 12 is closely attached in accordance with the shape of the heat insulating material, it is preferable that the resin film 12 has appropriate flexibility.

When the thickness of the resin film 12 exceeds 1 mm, it is difficult to follow the shape of the heat insulating material, and there is a concern that cracking or breakage may occur. Therefore, the thickness of the resin film 12 is preferably 1 mm or less, more preferably 0.1 mm or less, and still more preferably 0.05 mm or less.

On the other hand, the lower limit of the thickness of the resin film 12 is not particularly limited; however, it is preferably 0.005 mm or more, and more preferably 0.01 mm or more in order to prevent the rupture from easily occurring due to friction with the battery cell or the like.

### <Other materials contained in resin film>

In addition, since the resin film 12 is in contact with the battery cells 20a, 20b, and 20c, it is preferable that the resin film 12 has flame retardancy. Specifically, it is preferable that the resin film 12 contains an inorganic substance or a flame retardant material. Examples of the inorganic substance as a material constituting the resin film 12 include talc, calcium carbonate, aluminum hydroxide, titanium oxide, vermiculite, zeolite, synthetic silica, zirconia, zircon, barium titanate, zinc oxide, and alumina, and examples of the flame retardant material include a bromine-based flame retardant, a chlorine-based flame retardant, a phosphorus-based flame retardant, a boron-based flame retardant, a silicone-based flame retardant, and a nitrogen-containing compound.

### [Manufacturing method for heat transfer suppression sheet]

An example of a manufacturing method of the heat transfer suppression sheet 15 according to the present embodiment will be described below.

For example, a binder fiber (not shown in the drawing) having a core-sheath structure and the inorganic particles are charged into a mixer such as a V-type mixer at a predetermined ratio to produce a mixture.

It is noted that as described above, it is preferable to use, as the binder fiber, a fiber having a core-sheath structure that has a core portion composed of the first organic material and a sheath portion composed of the second organic material. In this case, a melting point of the first organic material is higher than a melting point of the second organic material.

Thereafter, the obtained mixture is charged into a predetermined mold and pressurized with a press machine or the like, and then the obtained molded body is heated, whereby the sheath portion of the binder fiber is melted. Thereafter, the heated molded body is cooled, whereby the binder fibers are fused to each other in a region in which the binder fibers are in contact with each other. In addition, the melted second organic material constituting the sheath portion and the inorganic particles present in a periphery of the binder fiber are fused to the surface of the binder fiber, that is, the surface of the organic fiber. In this way, the heat insulating material 11 processed into a sheet shape can be obtained.

Thereafter, the heat insulating material 11 is sandwiched between a set of the elastic sheets 16 prepared in advance, and a laminate composed of the elastic sheet 16 and the heat insulating material 11 is placed on a planar resin film, and for example, the planar resin film is bent to also cover the upper surface of the laminate with the planar resin film. Thereafter, the planar film on the lower surface of the laminate and the planar resin film on the upper surface of the laminate are heated while being pressurized in the periphery of the laminate to form the fused portion 14. Thereafter, the resin film in the periphery of the laminate is contracted by heating, whereby the resin film 12 is closely attached to the outer surface of the laminate. It is noted that the holes 13 are allowed to be formed in advance in regions serving as the first surface-side film 12a and the second surface-side film 12b of the resin film, at any timing before the resin film is contracted. By the steps as described above, the heat transfer suppression sheet 15 can be manufactured.

It is noted that the holes 13 having an elliptical shape having an elliptical shape may be formed in an elliptical shape in advance, or it may be formed in an elliptical shape by forming the circular holes 13 and then heating and contracting the resin film. In a case where the resin film is heated and contracted to have an elliptical shape, a method of adjusting a length of a pair of sides of the laminate and a length between a pair of fused portions in a direction parallel to the pair of sides, or a distance between the fused portion and the side where the planar resin film is bent can be used. For example, when a length between a pair of fused portions in a direction parallel to a pair of sides of the laminate is made close to a length of the pair of sides of the laminate, a force that allows the resin film to be contracted is increased, which makes it possible to form the hole 13 having an elliptical shape, which has a major axis in a direction orthogonal to this pair of sides.

In addition, a method of encompassing, with the resin film 12, the heat insulating material 11 in the first embodiment or the laminate of the heat insulating material 11 and the elastic sheet 16 in the second embodiment is not particularly limited, and examples thereof include, in addition to the shrink packaging which makes a film contracted as described above, a method of wrapping the heat insulating material 11 or the laminate with the resin film and then attaching them to each other with an adhesive or the like, and a method of accommodating the heat insulating material 11 or the laminate in a bag-shaped film. In any case where any of the methods is used, it is important that the area ratio of the holes 13 in the first surface-side film 12a and the second surface-side film 12b is set to be larger than the area ratio of the holes 13 in the end surface-side film 12c, and it is preferable that a joint portion between the resin films is present in the end surface-side film 12c.

### [Battery pack]

An example of a battery pack to which the heat transfer suppression sheet 10 according to the embodiment of the present invention is applied is as illustrated in Fig. 2. where the battery pack is an example of a power storage device. Here, the configuration and the effect of the battery pack will be specifically described with reference to Fig. 2.

As shown in Fig. 2, the battery pack 100 has battery cells 20a, 20b, and 20c and the heat transfer suppression sheet according to the present embodiment, and the battery cells are connected in series or in parallel.

For example, as shown in Fig. 2, the heat transfer suppression sheet 10 according to the present embodiment is interposed between the battery cell 20a and the battery cell 20b and between the battery cell 20b and the battery cell 20c. Further, the battery cells 20a, 20b, and 20c and the heat transfer suppression sheet 10 are accommodated in the battery case 30.

It is noted that the heat transfer suppression sheet 10 is as described above.

In the battery pack 100 configured as described above, since the heat transfer suppression sheet 10 having an effect of suppressing heat transfer is present between the battery cell 20a and the battery cell 20b, the propagation of heat to the battery cell 20b can be suppressed even in a case where a temperature of a certain battery cell 20a reaches a high temperature.

In addition, in the heat transfer suppression sheet 10 according to the present embodiment, since the heat insulating material 11 is encompassed in the resin film 12, an effect of suppressing powder falling can be obtained, and thus workability is improved at the time when the heat transfer suppression sheet 10 is incorporated between the respective battery cells 20a, 20b, and 20c. In addition, at the time when the battery cell generates heat and the temperature of the heat insulating material 11 in the heat transfer suppression sheet 10 rises, it is possible to prevent air in the inside or the like of the heat insulating material 11 from being violently jetted out from the end surface side of the heat insulating material 11, and thus it is possible to suppress the contamination in the battery case 30.

It is noted that the battery pack 100 according to the present embodiment is not limited to the battery pack illustrated in Fig. 2. For example, the heat transfer suppression sheet 10 may be disposed not only between the battery cell 20a and the battery cell 20b and between the battery cell 20b and the battery cell 20c, but also between battery cells 20a, 20b, 20c and the battery case 30, or may be attached to an inner surface of the battery case 30.

In the battery pack 100 configured as described above, it is possible to suppress the spread of the flame to the outside of the battery case 30 in a case where a certain battery cell ignites.

For example, the battery pack 100 according to the present embodiment is used for an electric vehicle (EV) or the like and may be disposed under the floor of a passenger. In this case, it is possible to ensure the safety of the passenger even if the battery cell ignites.

In addition, since the heat transfer suppression sheet 10 can be interposed not only between the respective battery cells but also disposed between the battery cells 20a, 20b, and 20c and the battery case 30, it is not necessary to newly produce a flame retardant material or the like, and thus a safe and low-cost battery pack 100 can be easily constituted.

As described above, various embodiments have been described above. However, it goes without saying that the present invention is not limited to such examples. It is obvious to those skilled in the art that various changes or modifications can be made within the scope described in the claims, and it is understood that those various changes or modifications naturally belong to the technical scope of the present invention. In addition, each constitutional component in the above embodiment may be randomly combined without departing from the spirit of the invention.

This application is based on a Japanese patent application filed on August 3, 2022 (Japanese Patent Application No. 2022-124246), the contents of which are incorporated herein by reference.

### REFERENCE SIGNS LIST

10, 15: heat transfer suppression sheet
11: heat insulating material
12: resin film
13: hole
14: fused portion
16: elastic sheet
20a, 20b, 20c: battery cell
30: battery case
100: battery pack

## Claims

1. A heat transfer suppression sheet comprising:
a heat insulating material comprising inorganic particles and an organic fiber; and
a resin film encompassing the heat insulating material,
wherein the resin film has holes,
the resin film is composed of a first surface-side film and a second surface-side film that are respectively disposed on a first surface side and a second surface side which are orthogonal to a thickness direction of the heat insulating material, and an end surface-side film that is disposed on an end surface side which is parallel to the thickness direction of the heat insulating material, and
an area ratio of the holes in the first surface-side film and the second surface-side film to a total area of the first surface-side film and the second surface-side film is larger than an area ratio of the holes in the end surface-side film to a total area of the end surface-side film.

2. The heat transfer suppression sheet according to claim 1, wherein the end surface-side film does not have the hole.

3. The heat transfer suppression sheet according to claim 1, wherein an average area per one hole of the holes in the first surface-side film and the second surface-side film is larger than an average area per one hole of the holes in the end surface-side film.

4. The heat transfer suppression sheet according to claim 1, wherein the end surface-side film has a fused portion in which the resin films are fused to each other.

5. The heat transfer suppression sheet according to claim 1, wherein the holes in the first surface-side film and the second surface-side film have an elliptical shape.

6. The heat transfer suppression sheet according to claim 5, wherein the first surface and the second surface of the heat insulating material have a rectangular shape, and
the holes in the first surface-side film and the second surface-side film have an elliptical shape having a major axis in substantially the same direction as a longitudinal direction of the first surface and the second surface of the heat insulating material.

7. The heat transfer suppression sheet according to claim 6, wherein the holes in the first surface-side film and the second surface-side film are disposed at substantially equal intervals on the first surface and the second surface of the heat insulating material.

8. The heat transfer suppression sheet according to claim 7, wherein the holes are arranged along a longitudinal direction and a direction orthogonal to the longitudinal direction on the first surface and the second surface of the heat insulating material.

9. The heat transfer suppression sheet according to claim 1, wherein the heat insulating material has void portions, and the void portions and the holes of the resin film communicate with each other.

10. The heat transfer suppression sheet according to claim 1, wherein the heat transfer suppression sheet has an elastic sheet at at least one of a space between the first surface of the heat insulating material and the first surface-side film or a space between the second surface of the heat insulating material and the second surface-side film.

11. A battery pack comprising:
battery cells; and
the heat transfer suppression sheet according to any one of claims 1 to 10,
wherein the battery cells are connected in series or in parallel.
